# EUROPEAN PATENT APPLICATION

(11) **EP 1 387 280 A1**
(43) Date of publication of application: **04.02.2004**
(21) Application number: 02714452.6
(22) Date of filing: 04.04.2002
(51) Int. Cl.: G06F 12/14, G11B 20/10

(54) **METHOD FOR PREVENTING UNAUTHORIZED COPY APPLICATION PROGRAM EXECUTION, ITS PROGRAM, ITS PROGRAM RECORDING APPARATUS, AND ITS PROGRAM RECORDING MEDIUM**

(30) Priority: 05.04.2001 JP 2001107260
(71) Applicant: ED-CONTRIVE INC., Ibaraki-shi, Osaka 567 0057 (JP)
(72) Inventor: NAKAYAMA, S.; Enzeruburessa Musashinokokuryo 506, Komae-shi, Tokyo 201 0003 (JP); TANIGUCHI, Junichi, Osaka-shi, Osaka 532 0026 (JP)
(74) Representative: Lemoine, Robert
(86) International application number: PCT/JP2002/003371
(87) International publication number: WO 2002/082280

(57) **Abstract**

It is an object of the present invention to provide a method for preventing the execution of an illicitly duplicated application program, that prevents the utilization of a duplicate produced by illicit copying, and, if the type of the recording medium that is being used is identical to the normal medium type where the application program is written, then the recording medium that is being used is a genuine product and the normal execution of the main program is conducted, but if the recording medium that is being used is an illicit copy obtained by copying on a recording medium of type different from the genuine product, the non-identity processing program is executed.

## Description

### BACKGROUND OF THE INVENTION

### 1. Field of the Invention

The present invention relates to a method for preventing the execution of an illicitly duplicated application program such as a game, and also to a program for preventing the execution, a recording device for the program, and a recording medium having the program recorded therein.

### 2. Description of the Related Art

Application programs such as games are developed with special programs by a time-consuming and costly process and are copyright protected by law. The recording media such as CD-ROMs where the application programs such as games are recorded are typically provided for counter value, and no problem is associated with the utilization of recording media such as CD-ROMs that have been procured by paying the price therefor, as long as they are used only as recording media. However, in recent years, the recording media have been illicitly used by copying the contents of the CD-ROMs on recording media, such as CD-Rs and the like, that can be recorded by users, and in malicious cases, one CD-ROM has been copied on a large number of CD-R, thereby eliminating the copyright protection or making it nominal. Accordingly, a technology for preventing such copying has been researched and developed in many directions, and has found practical use.

However, the technology for preventing such a copying is hardly perfect. Moreover, means for neutralizing the technology for preventing such a copying have appeared, making it difficult to completely prevent the illicit copying. Changing an approach, it is apparently possible to make the illicit copying senseless and to handle the users so that eventually they will quit illicit copying, if the illicit copying is conducted, but the duplicates produced by such an illicit copying cannot be used.

### SUMMARY OF THE INVENTION

The present invention is based on this idea and it is an object of the present invention to provide a method for preventing the execution of an illicitly duplicated application program, a program used to prevent such an execution, a recording device for such a program, and a recording medium having such an application program written therein, which make it impossible to use duplicates produced by illicit copying.

A method for illicit copying that have been most widely used in recent years is a method of copying an application program written on a CD-ROM onto a CD-R. In this case, the type of the recording medium which is the genuine product is a CD-ROM, whereas the recording medium duplicated by illicit copying is a CD-R. Thus, the type of the recording medium is different in the genuine product and the illicit duplicate.

Furthermore, typically when an application program written on a recording medium such as a CD-ROM and the like is executed by a computer provided with a reproduction device for such a recording medium, the OS (operating system) of the computer detects and controls the recording medium having written therein the program that is being executed via a BIOS (basic input-output system) or a driver controlling the reproduction device for the recording medium. Therefore, with the computer running, it is possible to receive information on the type of recording medium in-use in the computer by sending a request to the OS via an API (application program interface) or the like as to what is the type of the recording medium having written therein the application program that is being executed.

With the foregoing in view, the normal medium type, which is the type of the recording medium that was normally written into an application program, is introduced into the application program with the permission of the entity having authority to duplicate the application program. Thus, the normal medium type is written on the genuine product. Thereupon, when the computer runs the recording medium with the application program written therein, the in-use medium type, which is the type of the recording medium having written therein the application program that is being executed, is received by the computer by the above-described devise, and the decision as to whether the recording medium that is being utilized is the genuine product can be made by checking whether the received in-use medium type and the normal medium type written in the application program are identical. The present invention is based on this approach.

The method for preventing the execution of an illicitly duplicated application program in accordance with the present invention is described below in greater detail.

Thus, the present invention provides a method for preventing the execution of an illicitly duplicated application program, wherein the application program is composed of a main program and a previous program executed prior to the main program,
a computer, with the previous program,
detects the in-use medium type, which is the type of the recording medium having written therein the application program that is being presently executed, and also
reads the normal medium type, which is the information on the type of recording medium where the application program is normally written and the information contained in the application program,
conducts normal execution of the main program when the read-out normal medium type and the in-use medium type that was detected are identical, and conducts the execution of a non-identity processing program contained in the previous program when they are not identical.

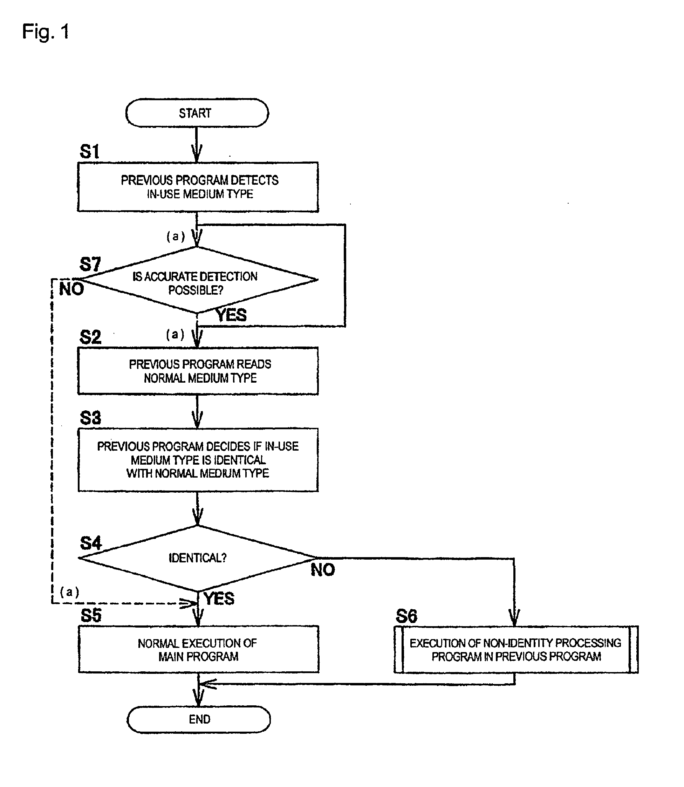

The method for preventing the execution of an illicitly duplicated application program in accordance with the present invention is a method for preventing the execution of an illicit duplicate which is obtained by illicit copying on a recording medium that is different from the recording medium of the genuine product where the application program is written. The portion of the flow chart in FIG. 1 which is indicated by solid lines illustrates the method for preventing the execution of an illicitly duplicated application program in accordance with the present invention. In the figure, the reference symbol S indicates the step number ( it has the same meaning anywhere in the present specification). The application program is composed of a main program, a previous program that is executed prior to the main program, and normal medium type information. As shown in FIG. 1, if the recording medium where the application program is written is executed in a computer provided with a device for reproducing such a recording medium, the previous program is executed and the next operation is implemented. First, the computer conducts the detection of the in-use medium type, which is the type of the medium that is being employed (S1). Then, the normal medium type that is written in the application program is read out (S2). Then, a decision is made as to whether the detected in-use medium type is identical to the normal medium type (S3). If they are identical (S4), normal execution of the main program is conducted (S5), and if they are not identical (S4), the execution of a non-identity processing program is conducted (S6). Thus, if the recording medium is a genuine product, the in-use medium type and normal medium type are identical and, therefore, normal execution of the main program is conducted. However, if the recording medium is an illicit duplicate obtained by copying on the recording medium different from the genuine product, the in-use medium type and the normal medium type are not identical and the execution of a non-identity processing program is conducted.

With the above-described method for preventing the execution of an illicitly duplicated application program, as described above, if the type of the recording medium that is being used is the same as the normal medium type that was written in the application program, the recording medium that is being used is a genuine product and the normal execution of the main program is conducted. However, in case of illicit duplicate obtained by copying on the recording medium different from the genuine product, the execution of the non-identity processing program is conducted. Therefore, if the contents of the non-identity processing program prohibits the execution of the main program, usage of the illicit-duplicate obtained by copying on the recording medium different from the genuine product can be prevented.

The program used in the above-described method for preventing the execution of an illicitly duplicated application program will be described below.

This program is a previous program executed prior to a main program, constitutes an application program together with the main program, and is used for implementing in a computer:
a detection function by which the computer detects the in-use medium type, which is the type of the recording medium having written therein the application program that is being presently executed;
a read-out function by which the normal medium type, which is the information on the type of recording medium where the application program is normally written and the information contained in the application program, is read out; and
a decision function by which the normal execution of the main program is conducted when the read-out normal medium type and the in-use medium type that was detected are identical, and the execution of a non-identity processing program contained in the previous program is conducted when they are not identical.

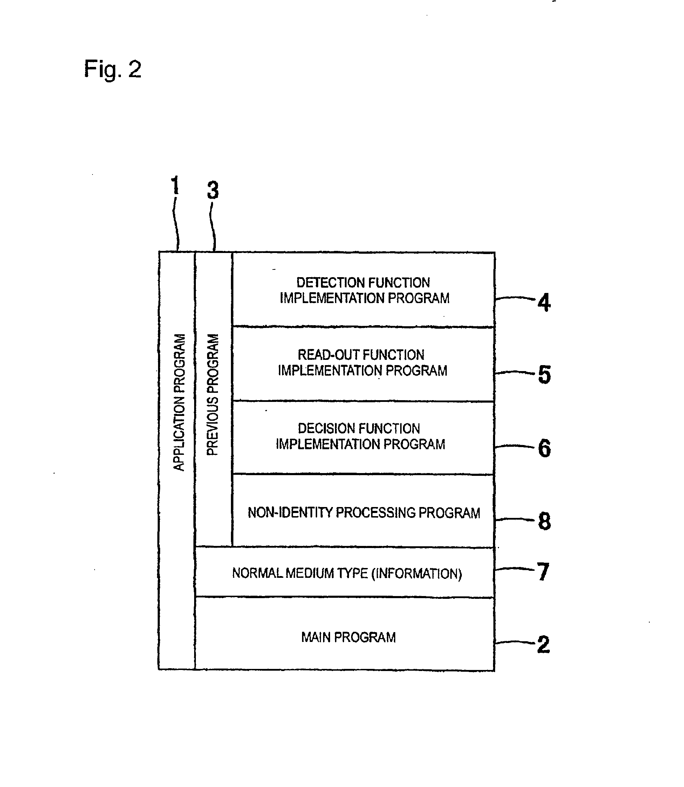

FIG. 2 illustrates the configuration of the application program. In FIG. 2, the application program 1, as described above, is composed of a main program 2 and a previous program 3 executed prior to the main program. The previous program 3 is composed of a detection function implementation program 4, a read-out function implementation program 5, a decision function implementation program 6, and a non-identity processing program 8. Furthermore, a normal medium type 7 is written as information in the application program 1. Among them, the above-described method for preventing the execution of illicitly duplicated application program is implemented by executing the previous program. Thus, if, as shown in FIG. 1, the recording medium with the application program 1 written therein is executed in a computer provided with a device for reproducing such a recording medium, first, the computer, by executing the detection function implementation program 4, conducts the detection of the in-use medium type, which is the type of the recording medium having written therein the application program 1 that is being presently executed (S1), and, by executing the read-out function implementation program 5, reads out the normal medium type that was written in the application program 1 (S2). Then, by executing the decision function implementation program 6, the computer decides as to whether the in-use medium type that was detected and the read-out normal medium type are identical (S3), and if they are identical (S4), the normal execution of the main program is conducted (S5) and if they are not identical (S4), the execution of a non-identity processing program is conducted (S6).

Thus, with the above-described program for preventing the execution of an illicitly duplicated application program, the above-described method for preventing the execution of an illicitly duplicated application program can be implemented.

From the standpoint of practical use, it is preferred that the above-described program for preventing the execution of an illicitly duplicated application program be a program in which the aforesaid detection function is implemented by providing a function by which the computer outputs a command for obtaining a variety of data relating to the recording medium from which reading is conducted to an in-use medium read-out control unit provided in the computer and conducting reading from the recording medium having written therein the application program that is being presently executed and a decision relating to the in-use medium type is made based on the contents of response from the in-use medium read-out control unit to this command.

With such a program for preventing the execution of an illicitly duplicated application program, a command for obtaining a variety of data relating to the recording medium is output to an in-use medium read-out control unit and a decision relating to the in-use medium type is made based on the contents of response from the in-use medium read-out control unit to this command. Therefore, a method for preventing the execution of an illicitly duplicated application program can be implemented in which the medium type in use can be accurately detected.

Furthermore, it is recommended that in the above-described program for preventing the execution of an illicitly duplicated application program, the detection function be provided with a function of detecting the presence of ATIP (Absolute Time In Pregroove) provided in the media such as CD-R, CD-RW, DVD-R, DVD-RAM, DVD-RW, or DVD+RW as a specific method for the detection of such media.

Thus, the above-described program for preventing the execution of an illicitly duplicated application program is a program for implementing a detection function provided with a function of detecting media such as CD-R, CD-RW, DVD-R, DVD-RAM, DVD-RW, or DVD+RW by detecting the ATIP provided in the media.

As described above, CD-Rs are most often used as a recording medium for conducting illicit copying. Since the CD-R reproduction is conducted quite similarly to that of CD-ROMs, the CD-R and CD-ROM have to be distinguished. For this purpose, it is recommended that the detection function possess a function of detecting ATIP that is present only in CD-R and is not present in CD-ROM. ATIP, as described above, is Absolute Time In Pregroove and is a data representing the recording position used when a postscipt is added to CD-R as a time. It is recorded by wobbling the side wall of a pregroove cut in CD-R. In CDs such as CD-ROMs and the like, such a pregroove is absent. Therefore, the ATIP is also absent. The ATIP can be detected not only in the CD-R drives conducting recording and reproduction of CD-Rs, but also in the recent CD drives used only for reproduction of CD-ROMs or CD-Rs. The ATIP is provided not only in CD-R, but also in CD-RW, DVD-R, DVD-RAM, DVD-RW, and DVD+RW. Therefore, it is recommended that the detection function possess a function of detecting the ATIP as means for detection thereof in those media too. DVD-ROM also does not have the ATIP, similarly to CD-ROM, and what was said with respect to CD-ROM also relates to DVD-ROM.

With the program preventing the execution of an illicitly duplicated application program, CD-R, CD-RW, DVD-R, DVD-RAM, DVD-RW, or DVD+RW and CD-ROM can be accurately distinguished by detecting the ATIP which is present only in CD-R, CD-RW, DVD-R, DVD-RAM, DVD-RW, or DVD+RW and is not present in CD-ROM. The same is true for DVD-ROM.

It is preferred that in the above-described program preventing the execution of an illicitly duplicated application program, a management function be added when the decision on the identity of the normal medium type and in-use medium type cannot be made with the decision function.

Thus, the above-described program preventing the execution of an illicitly duplicated application program serves as a program for implementing a decision function provided with a function of conducting the normal execution of the main program when the in-use medium type cannot be accurately detected by the detection function.

Such a program preventing the execution of an illicitly duplicated application program was designed to resolve the following program.

In order to detect the in-use medium type, the detection function of the above-described program preventing the execution of an illicitly duplicated application program uses a detection function of means for detecting the in-use medium function of the medium reproduction device provided in the computer executing the application program. For example, in case of a CD-ROM, the CD-ROM drive provides a CD-ROM detection function. The CD-ROM drive can read not only a CD-ROM, but also a CD-R. However, in recent years, most of CD-ROM drives are provided with the above-mentioned function making it possible to detect that the recording medium that is being reproduced is a CD-R. However, some of the CD-ROM drives are not provided with such a function. In such cases, the CD-ROM drive cannot detect a CD-R when the recording medium that is being reproduced is a CD-R. Accordingly, if no changes are introduced, the in-use medium type cannot be accurately detected with the detection function, a decision as to whether a CD-ROM or a CD-R is present cannot be made, and, therefore, a decision on the identity of the normal medium type and in-use medium type cannot be made accurately with the decision function. As a result, for example, even when the recording medium that is being used is a CD-ROM that is a genuine product, normal execution of the main program cannot be conducted. As a result, complaints are made by users, but because such a situation is unavoidable, normal execution of the main program is conducted when the CD-ROM drive is not provided with the function capable of detecting that the recording medium that is being reproduced is a CD-R, that is, when the in-use medium type cannot be accurately detected. Such a problem also arises with media of other types.

In FIG. 1, the (a) portion is the portion for implementing this function. Thus, S7 is inserted between S1 and S2, and normal execution of the main program is conducted (S5) when the in-use medium type cannot be accurately detected (S7).

With the program preventing the execution of an illicitly duplicated application program, when the in-use medium type cannot be accurately detected, the normal execution of the main program is conducted regardless of whether the medium in use is a genuine product or not. Therefore, complaints from the users that cannot use the program even when the genuine product is in-use can be prevented.

In the above-described program preventing the execution of an illicitly duplicated application program, the non-identity processing program may be also a program for implementing a function of displaying that the medium in use is not a genuine product and prohibiting the normal execution of the main program.

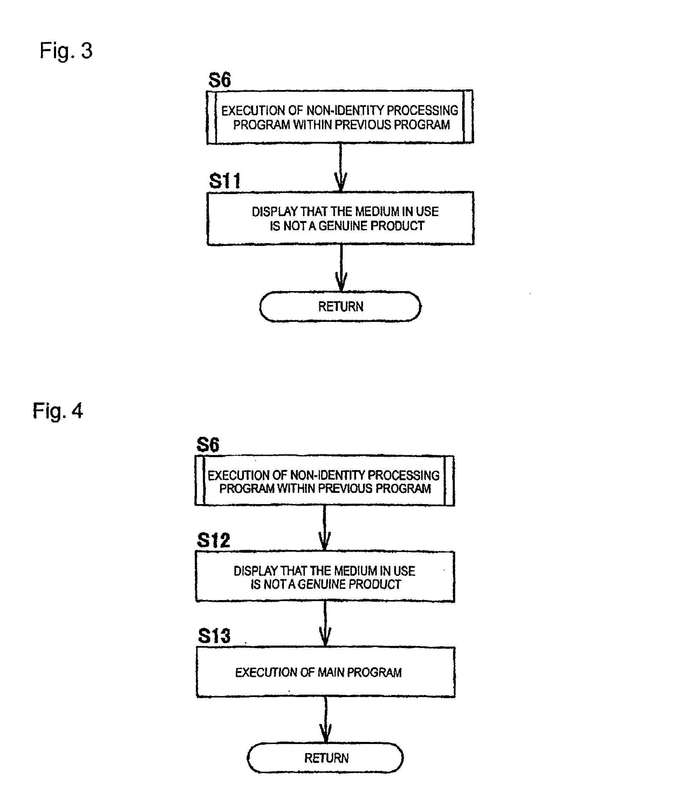

FIG. 3 is a flow chart of such a program. In FIG. 3, upon displaying that the medium in use is not a genuine product (S11), the procedure is ended without the normal execution of the main program.

As a result, the user can be informed that the medium in use is not a genuine product and demanded to stop illicit copying or using the illicit duplicate thus produced.

In the above-described program preventing the execution of an illicitly duplicated application program, the non-identity processing program may be also a program for implementing a function of displaying that the medium in use is not a genuine product and conducting the normal execution of the main program.

FIG. 4 is a flow chart of such a program. In FIG. 4, upon displaying that the medium in use is not a genuine product (S12), the execution of the main program is conducted (S13).

As a result, the user can be informed that the medium in use is not a genuine product, made to feel guilty that the illicitly copied product is used by conducting the normal execution of the main program, and finally be demanded to stop illicit copying or using the illicit duplicate thus produced.

In the above-described program preventing the execution of an illicitly duplicated application program, a method can be considered by which, when the normal medium type and the in-use medium type are not identical, though the normal execution of the main program is conducted for a fixed period from the initial utilization, once this period elapses, the normal execution of the main program is stopped.

Thus, the non-identity processing program is a program for implementing a function of conducting the execution of the main program only within a fixed period from the day of initial execution of the application program and then displaying that the medium in use is not a genuine product and stopping the execution of the main program.

Such a program preventing the execution of an illicitly duplicated application program was designed to resolve the following problem.

Some people use a tactic of acquiring an application program by purchasing a normally produced genuine product and then illicitly copying it on a recording medium different from the genuine product, thereby producing an illicit duplicate. Upon confirmation that the illicit duplicate can run normally, they sell the genuine product. This should be prevented because the copyright protection becomes nominal. The program preventing the execution of an illicitly duplicated application program was designed to resolve this problem.

FIG. 4 is a flow chart of such a program. In FIG. 4, a decision is made as to whether the application program execution date is within a fixed period from the day of initial execution (S14), if it is within the fixed period (S15), the normal execution of the main program is conducted (S16), and if not (S15), the medium in use is displayed to be not a genuine product (S17), and the procedure is ended without the normal execution of the main program.

As a result, once the user has disposed of the normally produced genuine product, the utilization of the duplicate obtained by illicit copying becomes impossible, and the user can be given a chance to reconsider the production of duplicates by illicit copying and utilization thereof and can be demanded to stop illicit copying or using the illicit duplicate thus produced.

The recording medium having recorded therein an application program comprising the above-described program preventing the execution of an illicitly duplicated application program can be produced by using a device for recording on the recording medium where the application program has to be normally written, with the permission of the entity having authority to duplicate the application program.

For example, when the normal medium type which is the recording medium where normal writing has to be conducted is a CD-ROM, this device is a disk fabrication device for a typical CD production, such as using a master press die for pressing a disk.

With such a device for recording the program preventing the execution of an illicitly duplicated application program, in which the program is recorded on a recording medium, a recording medium can be manufactured having recorded therein the program preventing the execution of an illicitly duplicated application program, in which the program is recorded on a recording medium.

Furthermore, the recording medium having recorded therein the application program comprising the above-described program preventing the execution of an illicitly duplicated application program can be produced by the above-described device for recording the program preventing the execution of an illicitly duplicated application program.

With the recording medium with the program preventing the execution of an illicitly duplicated application program that comprises the above-described programs preventing the execution of an illicitly duplicated application program, even when a program recorded on the recording medium is illicitly copied from this recording medium, that is, from the recording medium having recorded therein the program preventing the execution of an illicitly duplicated application program, to a recording medium of the type different from that of the aforesaid recording medium, the utilization of the illicitly copied recording medium that was thus illicitly copied can be prevented.

FD, CD-ROM, CD-R, CD-RW, DVD-ROM, DVD-R, DVD-RAM, DVD-RW, DVD+RW, MO, MD, HDD, semiconductor recording media, or those devices virtually configured in a computer can be used as the recording medium with the program preventing the execution of an illicitly duplicated application program that comprises the above-described programs preventing the execution of an illicitly duplicated application program.

### BRIEF DESCRIPTION OF THE DRAWINGS

FIG. 1 is a flow chart of the method for preventing the execution of an illicitly duplicated application program in accordance with the present invention and the illicitly duplicated application program;
FIG. 2 illustrates a configuration of the application program comprising the program for preventing the execution of an illicitly duplicated application program in accordance with the present invention;
FIG. 3 is a flow chart (1) of the non-identity processing program of the program for preventing the execution of an illicitly duplicated application program in accordance with the present invention;
FIG. 4 is a flow chart (2) of the non-identity processing program of the program for preventing the execution of an illicitly duplicated application program in accordance with the present invention;

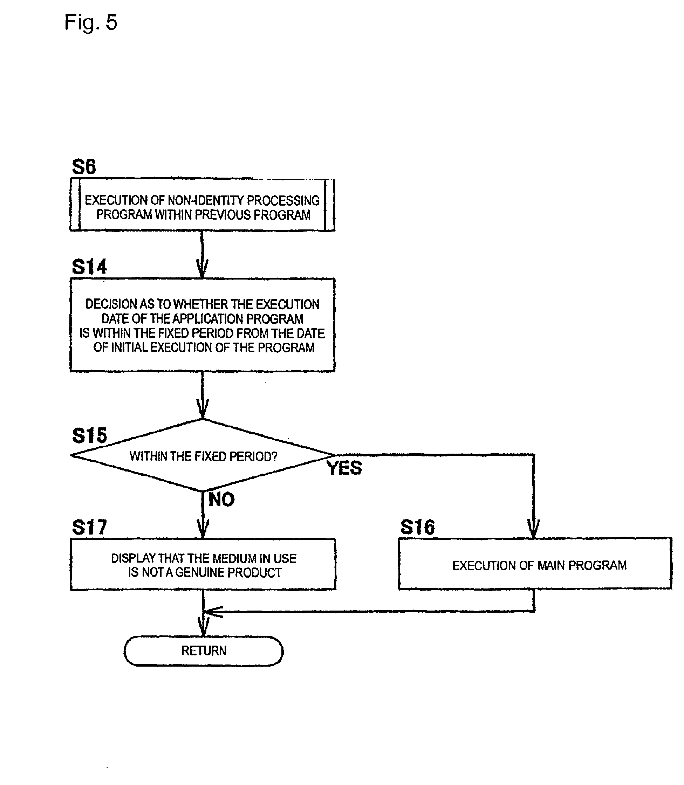

FIG. 5 is a flow chart (3) of the non-identity processing program of the program for preventing the execution of an illicitly duplicated application program in accordance with the present invention;
FIG. 6 is an explanatory diagram illustrating the concept of the present embodiment;
FIG. 7 is a hardware configuration of the computer executing the application program in the present embodiment;
FIG. 8 illustrates the relationship between the software and CD-ROM drive;
FIG. 9 is a flow chart (1) representing the operation of the present embodiment; and
FIG. 10 is a flow chart (2) representing the operation of the present embodiment.

### DESCRIPTION OF THE PREFERRED EMBODIMENTS

An embodiment of the present invention will be described below with reference to the appended drawings. The present invention, as described hereinabove, is focused on the illicit copying method that has recently been used most widely, that is, a method of copying an application program written on a CD-ROM onto a CD-R, which is a recording medium of type different from the genuine product. The present invention makes it impossible to use a recording medium duplicated by illicit copying even when the application program is illicitly copied from the recording medium of the genuine product, by writing the medium type of the genuine product into an application program and using the fact that the type of the recording medium that was duplicated by copying is different from the type of the recording medium of the genuine product.

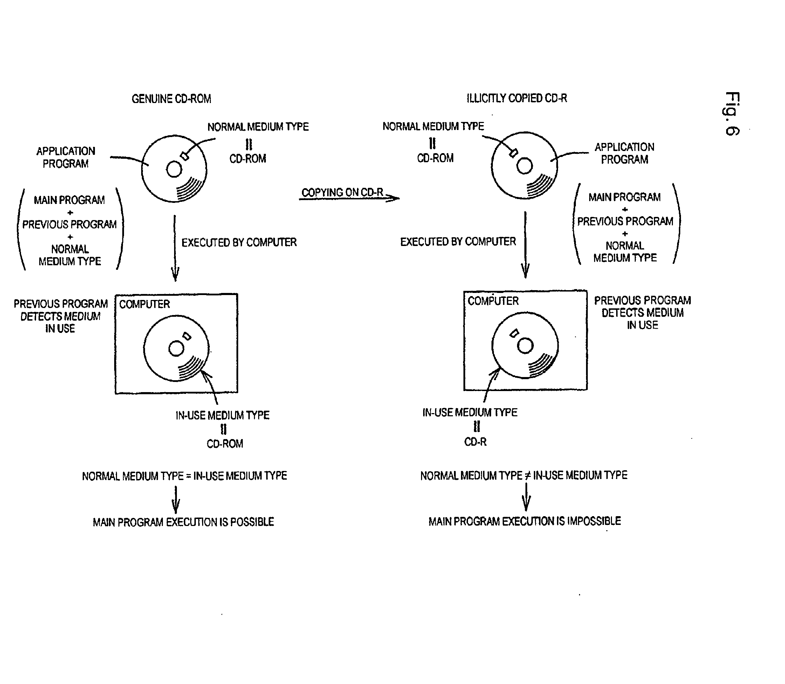

In the present embodiment, a case in considered in which the genuine product is a CD-ROM and the application program written on the CD-ROM is illicitly duplicated by illicit copying on a CD-R. FIG. 6 is an explanatory diagram illustrating the concept of the present embodiment. A main program and an application program composed of a previous program executed prior to the main program and the normal medium type (CD-ROM) information are recorded on a CD-ROM 11 which is the genuine product. The product obtained by directly illicitly copying the application program in its entirety on a CD-R is an illicitly duplicated CD-R.

As shown in FIG. 6, if the CD-ROM which is a genuine product is run by a computer, the in-use medium type is detected with the previous program. In this case, the in-use medium type is a CD-ROM and the normal medium type is also a CD-ROM. Therefore, the in-use medium type and the normal medium type are identical and the main program is executed. However, if the illicitly duplicated CD-R is run by a computer, the in-use medium type detected with the previous program is a CD-R and is different from the CD-ROM which is the normal medium type. Therefore, the in-use medium type and the normal medium type are not identical and the main program is not executed.

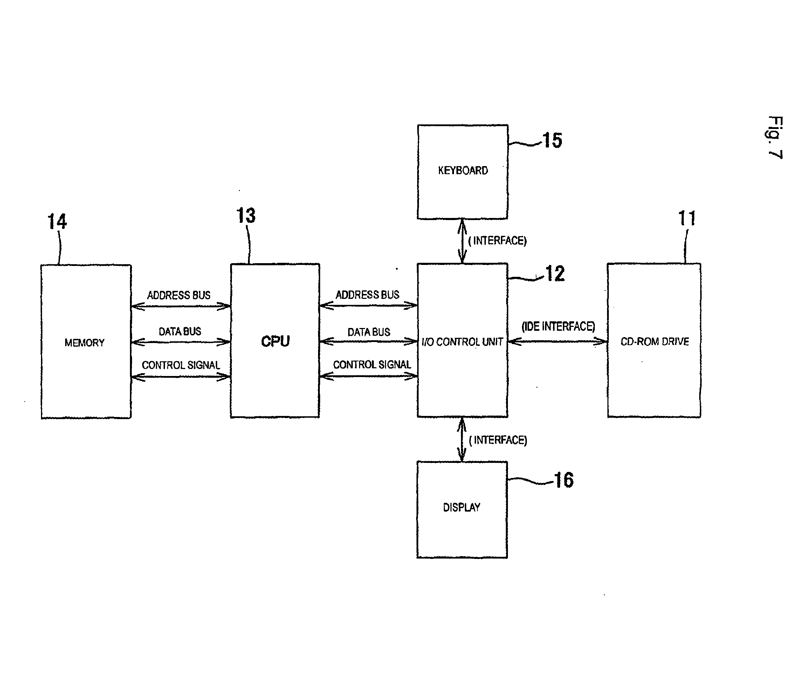

FIG. 7 shows the hardware configuration of the computer for executing the application program written on the CD-ROM, which is the genuine product, or the illicitly duplicated CD-R in the present embodiment. The hardware comprises a CD-ROM drive 11 provided with a firmware for control, an I/O control unit 12, a CPU 13, a memory 14, an input device 15 such as a keyboard or a mouse, and a display 16. When the application program is a game, a special input device is sometimes used. Those structural components are connected with various signal lines shown in the figure. The I/O control unit 12 and CD-ROM drive 11 are connected with an IDE (Integrated Device Electronics) interface. Furthermore, when a CD-R is loaded as a recording medium, the CD-ROM drive 11 is provided with hardware detecting the presence of an ATIP provided in the CD-R. Furthermore, the computer memory 14 is provided with an OS or OS-controlled calendar clock necessary for computer operation, or with an ATAPI (Attachment Packet Interface) driver for sending and receiving commands and responses to and from the CD-ROM 11 via an IDE interface.

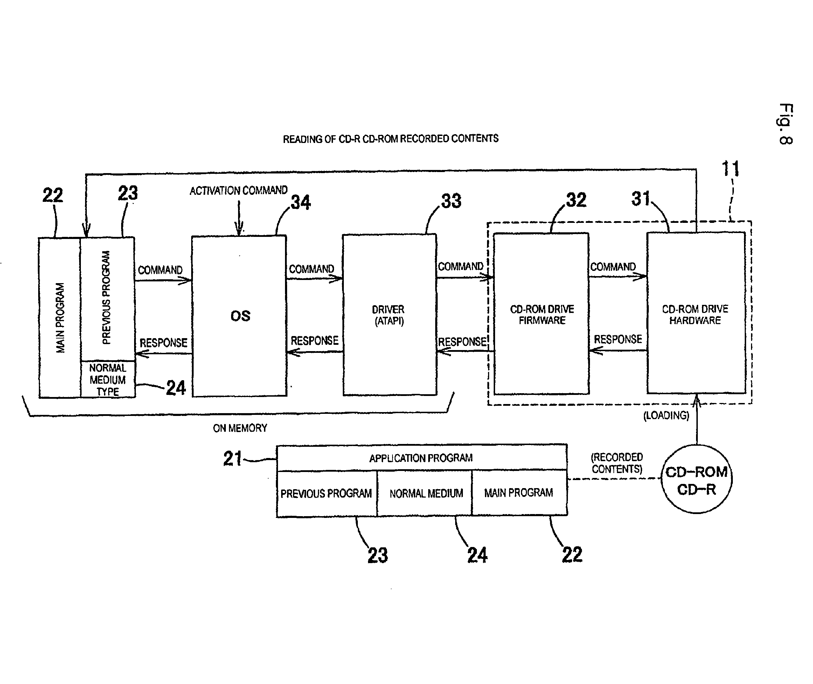

FIG. 8 illustrates the relationship between the software and CD-ROM drive 11 in the present embodiment. The CD-ROM drive 11 comprises a CD-ROM drive hardware 31 for control and firmware 32. Furthermore, the above-mentioned OS 34 and ATAPI driver 33 are provided on the memory 14. A CD-ROM or a CD-R with an application program 21 recorded therein is loaded in the CD-ROM drive 11. Furthermore, the application program 21, as described above, is composed of a main program 22, a previous program 23 executed prior to the main program, and a normal medium type (CD-ROM) information 24. Those programs or information are read out, when necessary, from the CD-ROM or CD-R loaded in the CD-ROM drive 11 and extended on the memory. Commands and responses shown in the figure are transmitted between the components shown in FIG. 8.

In the CD-ROM drive 11, as described above, both the CD-ROM and the CD-R can be read. In both cases, the type of the recording medium detected in the CD-ROM drive 11 is a CD. Only when means for detecting the ATIP of the CD-R is present in the CD-ROM drive 11, the presence of the CD-R is established by detecting the ATIP only in the CD-R. In other words, in case of a CD, the presence of a CD-ROM is established if no ATIP is detected. However, there are cases when no means for detecting the ATIP in the CD-R is provided in the CD-ROM drive. In such cases, it is not clear whether means for ATIP detection is present, but the ATIP is not detected because the recording medium that is being used is not a CD-R, or that the ATIP is not detected because there is no means for detecting the ATIP. Therefore, it is impossible to decide whether a CD-ROM or a CD-R is present, and the problem that is arisen thereby is that the execution of the application problem becomes impossible despite the utilization of a genuine product. This problem can be resolved for the time being by employing a processing procedure by which, first, the detection of a CD type is conducted and then the CD-ROM drive is checked for a capability to detect a CD-R, and only if such a detection is possible, the type of recording medium that is being used is identified as either a CD-ROM or a CD-R, and if such a detection is impossible, the recording medium that is being used is considered to be a genuine product, without distinguishing between the genuine product and illicit copy. Thus, by doing so it is possible to eliminate the inconveniency of being unable to execute an application program despite the utilization of a genuine product if the CD-ROM drive is nor provided with means for detecting the ATIP of CD-R and also to prevent complaints based on that inconveniency. In this case, the application program can be executed even if the illicit duplicate is used. However, in recent years the share of CD-ROM drives which are not equipped with means for detecting the ATIP of CD-R in the total number of CD-ROMs has decreased and the above-described procedure can be considered as an appropriate countermeasure, taking into account the above-mentioned complaints. The configuration of the present embodiment is based on such a consideration.

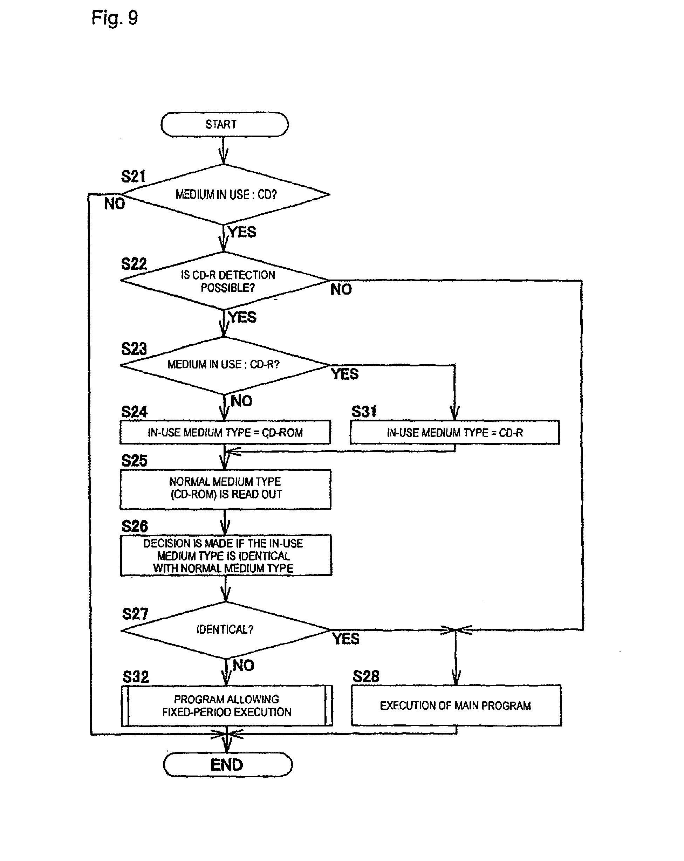

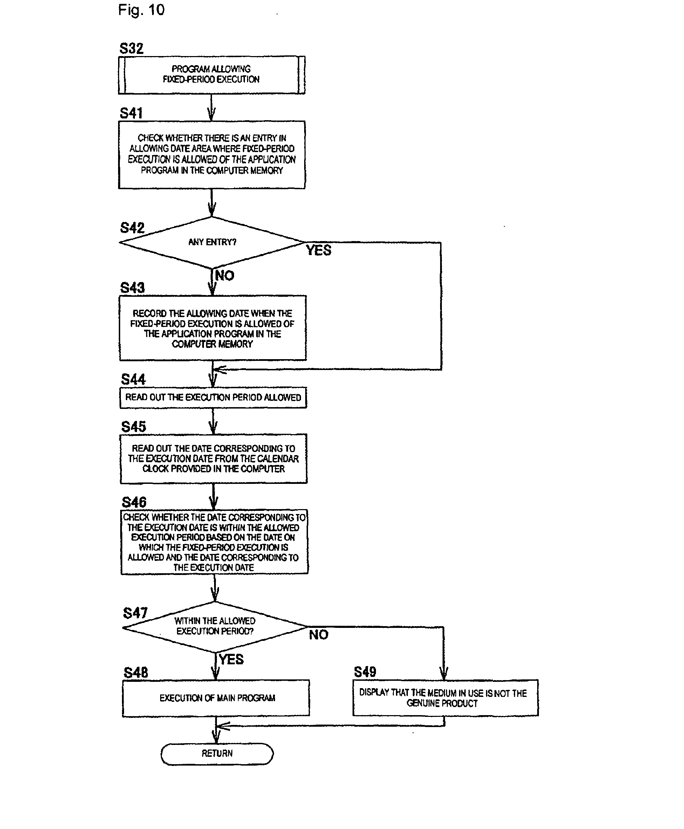

Furthermore, the operation conducted when a CD-ROM or CD-R is loaded in the CD-ROM drive 11 of the computer and the computer executes the application program 21 recorded in the CD-ROM or CD-R will be described below based on FIGS. 7 to 10 in reference to the present embodiment. FIGS. 9 and 10 are the flow charts illustrating this operation.

If an activation command for the application program 21 is sent from the input device shown in FIG. 7 to the OS 34, the previous program 23 of the application program 21 written on the CD-ROM or CD-R is read out, as shown in FIG. 8, and stored in memory 14. The computer conducts communication with the CD-ROM drive 11 by sending a command to the OS or by receiving the response from the OS by virtue of the previous program 23.

In FIG. 9, first, the previous program 23 instructs to conduct the detection of the in-use medium type and checks whether the medium is a CD or not (S21). If it is not a CD, the processing is ended. If it is a CD, the possibility to detect a CD-R is checked (S22). If the detection is impossible, the main program 22 is executed (S28). If the detection is possible, the in-use medium type is checked as to whether it is a CD-R or not (S23). If it is not a CD-R, the in-use medium type is considered to be a CD-ROM (S24), and if it is a CD-R, the in-use medium type is considered to be a CD-R (S31). Then, the normal medium type 24 is read from the application program 21 (S25) and a decision is made as to whether the in-use medium type and normal medium type 24 are identical (S26). If they are identical, the main program 22 is executed (S28). If they are not identical, a program allowing a fixed-period execution, which is a non-identity processing program contained in the previous program 23, is executed (S32). Thus, the normal medium type 24 is a CD-ROM and when the in-use medium type is a genuine product, it is a CD-ROM. Therefore, in this case, the in-use medium type and normal medium type 24 are identical and the main program 22 is executed. However, when the in-use medium type is an illicit duplicate, it is a CD-R. Therefore, in this case, the in-use medium type and normal medium type 24 are not identical and the program allowing a fixed-period execution is executed.

The program allowing a fixed-period execution is primarily designed to prevent the execution of main program 22 when the in-use medium type is a CD-R, that is, an illicit duplicate, but it allows the main program 22 to be executed only for a fixed period and ends the execution of the main program 22 at the instant the fixed period has elapsed from the day of initial execution.

In order to use the program allowing a fixed-period execution, an area for entering a fixed-period allowed execution date of the application program 21 is secured in the memory 14 of the computer executing the application program 21. Furthermore, the allowed execution period, for example, three days, in which the execution of an illicit duplicate is allowed is maintained as information in the previous program 23.

FIG. 10 is a flow chart representing the operation of the program allowing a fixed-period execution. In FIG. 10, first, the presence of an entry in the fixed-period allowed execution date area of application program 21 located in the computer memory 14 is checked (S41). If no entry was made (S42), the date till which the execution is allowed is initially entered into this area (S43). If the entry has been made (S42), S43 is bypassed and the procedure goes to a next step. Thus, the allowed execution period is read from the previous program 23 (S44), the date corresponding to the current execution date is read from the calendar clock provided in the computer (S45), and based on the fixed-period allowed execution date and the date corresponding to the current execution date, the presence of the date corresponding to the current execution date within the allowed execution period is checked (S46). If it is within the allowed execution period (S47), the main program is executed (S48), and if it is not within the allowed execution period (S47), the computer display 16 displays that the medium in use is not a genuine product (S49) and the procedure is ended without conducting the main program execution.

Some people, as was mentioned above, use a tactic of acquiring an application program by purchasing a CD-ROM which is a normally produced genuine product and then illicitly copying it on a CD-R that is different from the CD-ROM which is the genuine product, thereby producing an illicit duplicate, then confirming that the illicit duplicate can run normally, and selling the CD-ROM which is the genuine product. This should be prevented because the copyright protection becomes nominal. Using the above-described program allowing a fixed-period execution makes it possible to resolve this problem. With such a program, once the user has disposed of the normally produced genuine product, the utilization of the duplicate obtained by illicit copying becomes impossible, and the user can be given a chance to reconsider the production of duplicates by illicit copying and utilization thereof and can be demanded to stop illicit copying or using the illicit duplicate thus produced.

In the above-described embodiment, the program allowing a fixed-period execution is executed as a non-identity processing program if the identity of the in-use medium type and normal medium type 24 is evaluated and the types are found to be not identical. Alternatively, in this case a program which displays on the computer display 16 that the medium in use is not a genuine product and ends the procedure, without executing the main program, may be executed as the processing program.

In such a case, if the type of the in-use recording medium, which is written in the application program, is identical to the normal medium type written in the application program, the recording medium that is being in-use is a genuine product and the normal execution of the main program is conducted. However, if it is an illicit duplicate obtained by copying on the recording medium different from the genuine product, the normal execution of the main program is not conducted. Therefore, the utilization of the illicit duplicate obtained by illicit copying on the recording medium different from the genuine product can be prevented.

Alternatively, a program which displays on the computer display 16 that the medium in use is not a genuine product and then conducts the execution of the main program may be executed as the non-identity processing program.

In such a case, the user can be informed that the medium in use is not a genuine product, made to feel guilty that the illicitly copied product is used by conducting the normal execution of the main program, and finally be demanded to stop illicit copying or using the illicit duplicate thus produced.

The contents of the non-identity processing program is not limited to the above-described procedures and the program with any contents may be employed, provided that the user is demanded to stop illicit copying or using the illicit duplicate thus produced.

Furthermore, in the above-described embodiment, a method for detecting the ATIP present in CD-Rs and not present in CD-ROMs was used as a method for detecting a CD-R when the CD-R utilized was an illicit duplicate obtained by illicit copying from the CD-ROM as a genuine product. However, such a method can be also used when the illicit duplicate is not a CD-R, but a CD-RW, DVD-R, DVD-RAM, DVD-RW, or DVD+RW. Moreover, the same is true as same as CD-ROM when the genuine product is a DVD-ROM.

Further, in order to verify the type of the medium that is being used, as shown in FIG. 8, first, the previous program 23 of application program 21 sends a command to obtain information on the medium loaded in a CD-ROM drive to firmware 32 of CD-ROM conducting control for reading the information recorded on the medium, that is being used, via the OS 34 and ATAPI driver 33. Then, a method is employed by which the response from the firmware 32 is received via the ATAPI driver 33 and OS 34 and the in-use medium type is evaluated based on the response contents. Data such as a capacity and the like, or the operation state of components of the CD-ROM drive, or an error in case the response to the command is impossible can be considered as examples of the response. In FIG. 8, since a CD-ROM or CD-R are presented as recording media, the ATAPI driver 33 or firmware 32 of CD-ROM drive is used. However, they can be replaced with other devices to accommodate a variety of recording media.

With such a method, a command to obtain various information relating to a recording medium is output and the type of the medium that is being used is evaluated based on the contents of the response to this command. Therefore, the medium that is being used can be accurately detected.

Furthermore, in the above-described embodiment, a case was considered in which the genuine product was a CD-ROM and the illicit duplicate was CD-R. However, a case in which the genuine product is a CD-R and the illicit duplicate is a CD-ROM can be also considered. For example, test programs that are being developed are sometimes recorded and distributed on CD-Rs, and even when such CD-Rs are brought overseas and CD-ROMs are illicitly duplicated by pressing disks with a master press die, the execution of the illicitly duplicated CD-ROMs can be prevented by the same reasoning as in the above-described embodiment.

In the above-described embodiment, CD-ROM and CD-R were considered as the recording medium. The present invention, is however, not limited thereto, and FD, CD-RW, DVD-ROM, DVD-R, DVD-RAM, DVD-RW, DVD+RW, MO, MD, HDD, semiconductor recording media, or those devices virtually configured in a computer may also be used as the recording medium.

With the invention described in claim 1, if the type of the recording medium that is being used is identical to the normal medium type written into the application program, the recording medium that is being used is a genuine product and normal execution of the main program is conducted. However, if it is an illicit duplicate obtained by copying on the recording medium different from the genuine product, the non-identity processing program is executed. Therefore, the utilization of the illicit duplicate obtained by illicit copying on the recording medium different from the genuine product can be prevented by employing the non-identity processing program with the contents prohibiting the execution of the main program.

With the invention described in claim 2, the method for preventing the execution of an illicitly duplicated application program described in claim 1 can be implemented.

With the invention described in claim 3, a command to obtain a variety of data relating to the recording medium is output to an in-use medium read-out control unit and a decision relating to the in-use medium type is made based on the contents of response from the in-use medium read-out control unit to this command. Therefore, a method for preventing the execution of an illicitly duplicated application program can be implemented in which the medium in use can be accurately detected.

With the invention described in claim 4, CD-R, CD-RW, DVD-R, DVD-RAM, DVD-RW, or DVD+RW and CD-ROM can be accurately distinguished by detecting the ATIP present in CD-R, CD-RW, DVD-R, DVD-RAM, DVD-RW, or DVD+RW and not present in CD-ROM. The same is true for the case of DVD-ROM.

With the invention described in claim 5, when the employed medium type detection cannot be accurate, the normal execution of the main program is conducted both when the medium in use is a genuine product and when it is not. Therefore, complaints from the users that the utilization is impossible even when the genuine product is used can be prevented.

With the invention described in claim 6, the user can be informed that the medium in use is not a genuine product and demanded to stop illicit copying or using the illicit duplicate thus produced.

With the invention described in claim 7 , the user can be informed that the medium in use is not a genuine product, made to feel guilty that the illicitly copied product is used by conducting the normal execution of the main program, and finally be demanded to stop illicit copying or using the illicit duplicate thus produced.

With the invention described in claim 8, once the user has disposed of the normally produced genuine product, the utilization of the duplicate obtained by illicit copying becomes impossible, and the user can be given a chance to reconsider the production of duplicates by illicit copying and utilization thereof and can be demanded to stop illicit copying or using the illicit duplicate thus produced.

With the invention described in claim 9, a recording medium having recorded therein the program for preventing the execution of an illicitly duplicated application program can be produced.

With the invention described in claim 10, even when a program recorded on the recording medium is illicitly copied from the recording medium in accordance with the present invention, that is, from the recording medium having recorded therein the program preventing the execution of an illicitly duplicated application program, to a recording medium of the type different from that of the aforesaid recording medium, the utilization of the illicitly duplicated recording medium that was thus illicitly copied can be prevented.

## Claims

1. A method for preventing the execution of an illicitly duplicated application program, wherein the application program is composed of a main program and a previous program executed prior to the main program; and
wherein said previous program causes a computer to detect the in-use medium type, which is the type of the recording medium having written therein said application program that is being presently executed and also to read the normal medium type, which is the information that is contained in said application program and regarding the type of recording medium where said application program is normally written; and, if the read-out normal medium type and said in-use medium type that was detected are identical, to conduct normal execution of said main program and, they are not identical, to conduct the execution of a non-identity processing program contained in said previous program.

2. A program for preventing the execution of an illicitly duplicated application program, which is a previous program executed prior to a main program, constitutes an application program together with said main program, and is used for implementing in a computer:
a detection function of detecting an in-use medium type, which is the type of the recording medium having written therein said application program that is being presently executed by the computer;
a read-out function of reading out the normal medium type, which is the information that is contained in the application program and regarding the type of recording medium where the application program is normally written; and
a decision function by which the normal execution of said main program is conducted when the normal medium type thus read out and said in-use medium type that was detected are identical, and the execution of a non-identity processing program contained in said previous program is conducted when they are not identical.

3. The program for preventing the execution of an illicitly duplicated application program according to claim 2, wherein said detection function is provided with a function of outputting a command to obtain a variety of data relating to recording medium having written therein said application program that is being presently executed by said computer, to an in-use medium read-out control unit provided in said computer and conducting reading from said recording medium, and of deciding said in-use medium type, based on contents of the response from said in-use medium read-out control unit to this command.

4. The program for preventing the execution of an illicitly duplicated application program, according to claim 2 or claim 3, wherein said detection function is provided with a function of detecting recording media such as CD-R, CD-RW, DVD-R, DVD-RAM, DVD-RW, or DVD+RW by detecting the ATIP provided in said recording media.

5. The program for preventing the execution of an illicitly duplicated application program, according to any one of claims 2 to 4, wherein said decision function is provided with a function of conducting normal execution of said main program when said in-use medium type cannot be accurately detected by said detection function.

6. The program for preventing the execution of an illicitly duplicated application program, according to any one of claims 2 to 5, wherein said non-identity processing program is a program for implementing a function of displaying that said in-use medium is not a genuine product and not conducting the normal execution of said main program.

7. The program for preventing the execution of an illicitly duplicated application program, according to any one of claims 2 to 5, wherein said non-identity processing program is a program for implementing a function of displaying that said medium in use is not a genuine product and conducting the execution of said main program.

8. The program for preventing the execution of an illicitly duplicated application program, according to any one of claims 2 to 5, wherein said non-identity processing program is a program for implementing a function of conducting the execution of said main program only within a fixed period from the day of initial execution of said application program and then displaying that said medium in use is not a genuine product and stopping the execution of said main program.

9. A device for recording the program for preventing the execution of an illicitly duplicated application program, according to any one of claims 2 to 8.

10. A recording medium for a program for preventing the execution of an illicitly duplicated application program, on which the program according to any claim from claims 2 to 8 is recorded.

11. The recording medium for a program for preventing the execution of an illicitly duplicated application program, according to claim 10, wherein said recording medium is any one of FD, CD-ROM, CD-R, CD-RW, DVD-ROM, DVD-R, DVD-RAM, DVD-RW, DVD+RW, MO, MD, HDD, semiconductor recording media, or those devices virtually configured in a computer.
